# EUROPÄISCHE PATENTSCHRIFT

(11) **EP 0 372 338 B1**
(45) Veröffentlichungstag und Bekanntmachung des Hinweises auf die Patenterteilung: **15.12.1993**
(21) Anmeldenummer: 89121824.0
(22) Anmeldetag: 25.11.1989
(51) Int. Cl.: B60N 2/44

(54) **Sitzunterteil für Fahrzeugsitze**
Seat underpart for vehicle seats
Support d'assise pour sièges de véhicule

(30) Priorität: 09.12.1988 DE 3841534
(43) Veröffentlichungstag der Anmeldung: 13.06.1990
(73) Patentinhaber: BAYER AG, 51368 Leverkusen (DE)
(72) Erfinder: Rink, Manfred, D-5000 Köln 60 (DE)

(56) Entgegenhaltungen:
- EP-A- 0 276 769
- EP-A- 0 308 374
- FR-A- 2 445 244
- US-A- 2 748 835

## Beschreibung

Die Erfindung betrifft ein Sitzunterteil für Fahrzeugsitze gemäß Oberbegriff des Patentanspruches 1, wie aus US-A-2 748 835 bekannt.

Häufig bestehen Sitzunterteile bisher auch aus einem Stahlrahmen, welcher gleichzeitig das Sitzpolster trägt. Nachteilig dabei ist, daß bei Verschleiß des Polsters oder des Bezuges meist das gesamte Sitzunterteil ausgetauscht werden muß. Das Fertigen und Zusammensetzen eines Sitzrahmens aus tiefgezogenen oder gebogenen Stahlblechprofilen ist sehr aufwendig, und zwar insbesondere, weil auch noch Schweiß- oder Nietvorgänge damit verbunden sind.

Die ältere, nicht vorveröffentlichte europäische Patentanmeldung 88830356.7 gemäß EP-A-0 308 374 beschreibt den Aufbau eines Fahrzeugsitzes, der aus mehreren Modulen besteht, die miteinander montiert werden können, wobei jedes Modul in verschiedenen wechselweise austauschbaren Ausführungsformen herstellbar ist, um eine wirtschaftliche Herstellung verschiedener Sitzmodelle zu ermöglichen.

Es besteht die Aufgabe, ein Sitzunterteil zu schaffen, welches die Austauschbarkeit des Polsters und/oder Bezuges erleichtert, in Serie preiswert und einfach herstellbar ist und trotzdem die notwendigen Festigkeitseigenschaften aufweist.

Diese Aufgabe wird gemäß Kennzeichen des Patentanspruchs 1 gelöst.

Der Sitzrahmen läßt sich derart gestalten, daß die Verstellelemente und gegebenenfalls Dämpfer abgedeckt sind. Durch die Trennung in Längsträger und Polsterträger lassen sich beanspruchungsgerechte Kunststoffe für den Polsterträger und die Längsträger einsetzen. Die Stahltraversen bestehen vorzugsweise aus Rohren; es können aber auch andere geeignete Profile verwendet werden. Es versteht sich, daß alle Anbindungspunkte an diesen Kunststoffteilen kunststoffgerecht gestaltet sind, d.h. Verstärkungen aufweisen, wie beispielsweise jene Stellen, an denen die Stahltraversen durch die Längsträger hindurchgeführt sind. Sowohl Polsterträger als auch Längsträger sind im Spritzgußverfahren preiswert herstellbar. Die Beschläge bestehen in der Regel aus einem Gelenk mit Laschen zum Befestigen der Rückenlehne und zum Befestigen an den Längsträgern.

Gemäß einer besonderen Ausführungsform sind die Längsträger schalenartig gestaltet und ihr Innenraum weist Verstärkungsrippen auf.

Diese Verstärkungsrippen lassen sich beim Spritzgießen direkt mit anformen und erlauben geringsten Materialeinsatz für die Längsträger zum Erzielen der erforderlichen Festigkeiten.

Der Polsterträger besteht vorzugsweise aus einem Acrylnitril-Butadien-Styrol-Copolymer.

Nach einer weiteren Alternative besteht der Polsterträger aus einem Blend aus Polycarbonat/Acrylnitril-Butadien-Styrol-Copolymer.

Die Längsträger bestehen vorzugsweise aus Polyamid-6 mit einem Glasfasergehalt von 20 bis 40 Gew.-%.

Alternativ bestehen sie aus Polyamid-6.6 mit einem Glasfasergehalt von 20 bis 40 Gew.-%.

Diese hochwertigen, hochfesten Kunststoffe gewährleisten, daß bei entsprechender Dimensionierung der Längsträger auch bei Überlast, wie bei Crashunfällen, eine ausreichende Sicherheit gegeben ist.

Gemäß einer weiteren besonderen Ausführungsform dient die hintere Stahltraverse als Lager für einen Sicherheitsgurt. Das heißt, das zur Wagenmitte weisende Ende der Stahltraverse kann für das Schloß bzw. für die das Schloß tragende Peitsche als Lager dienen, während das nach außen weisende Ende für ein Gurtende als Lager dienen kann. Bei einem Rohr als Stahltraverse lassen sich die Enden in einfachster Weise hierfür mit Innengewinde versehen, so daß die Peitsche bzw. das Kopfende mittels einer Schraube zu befestigen ist.

In der Zeichnung ist das neue Sitzunterteil am Beispiel eines solchen für einen Kfz-Vordersitz rein schematisch dargestellt und nachstehend näher erläutert. Es zeigen:
- Fig. 1: den Sitzrahmen des Sitzunterteils,
- Fig. 2: den Polsterträger,
- Fig. 3: das Polster,
- Fig. 4: den Polsterträger mit Polster und
- Fig. 5: den Polsterträger mit Polster und Bezug.

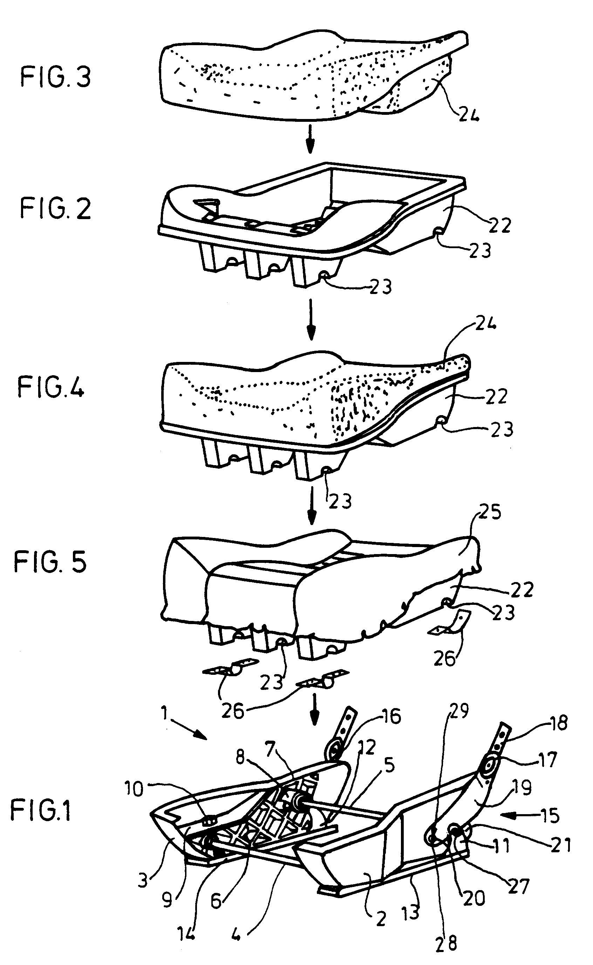

In Fig. 1 besteht der Sitzrahmen 1 aus zwei im wesentlichen spiegelbildlich gestalteten Längsträgern 2, 3 aus mit 30 Gew.-% Glasfaser gefülltem Polyamid-6. Sie sind durch Stahltraversen 4, 5 aus Stahlrohr fest miteinander verbunden. Die Längsträger 2, 3 sind schalenartig gestaltet und ihr Innenraum 6 ist durch gitterartig angeordnete, angeformte Rippen 7 verstärkt. Diese Längsträger 2, 3 wurden im Spritzgießverfahren hergestellt und sind so gestaltet, daß sie leicht entformbar sind. Es versteht sich, daß für die Anbringung von Teilen entsprechende Anformungen bzw. Verstärkungen 8, beispielsweise die Durchführungen 8 für die Stahltraversen 4, 5 vorgesehen sind.

Im Innenraum 6 der Längsträger 2, 3 ist eine Lagerfläche 9 für eine Halteschraube 10 vorgesehen. Die hintere Stahltraverse 5 ragt durch die Längsträger 2, 3 hindurch und ist in U-förmigen Lagerböcken 11, 12 gelagert, welche auf am Fahrzeugboden (nicht dargestellt) verschieb-und fixierbaren Längsschienen 13, 14 angeordnet sind. Diese Lagerböcke 11, 12 aus gestanztem und gebogenem Stahlblech dienen als Kipplager für den Sitzrahmen 1. Dabei stützen sich die Längsträger 2, 3 auf diesen Längsschienen 13, 14 ab. An den Längsträgern 2, 3 sind Beschläge 15, 16 zum Befestigen der nicht dargestellten Rückenlehne angeordnet. Diese bestehen jeweils aus einem Gelenk 17 und einer Lasche 18 für die Anbindung der Rückenlehne und einer Lasche 19 für die Anbindung an den Längsträgern 2 u.3 .Die Lasche 19 weist ein Auge 20 auf, das zusammen mit dem Bolzen 28 aus Stahl ein Drehgelenk 29 bildet. Jedem Beschlag 15, 16 ist ein Schnapphaken 21 zugeordnet, welchem die Stahltraverse 5 als Gegenlager dient. Wird der Schnapphaken 21 gelöst, kann die Rückenlehne über das Drehgelenk 29 nach vorne geklappt werden.

Der Polsterträger 22 gemäß Fig. 2 ist ebenfalls im Spritzgußverfahren hergestellt, und zwar aus einem ABS-Copolymer. Er ist wannenartig gestaltet und weist an der Unterseite angeformte Ausnehmungen 23 auf, in welche die Stahltraversen 4, 5 (Fig. 1) einrasten können.

Das Polster 24 gemäß Fig. 3 besteht aus formverschäumtem Polyurethan-Weichschaumstoff und ist in der üblichen Weise gestaltet.

In Fig. 4 ist das Polster 24 in den Polsterträger 22 eingesetzt.

In Fig. 5 ist der Bezug 25 bereits darübergespannt.

Nunmehr kann der Polsterträger 22 samt Polster 24 und Bezug 25 auf dem Sitzrahmen 1 (Fig. 1) montiert werden, indem man nach dem Einrasten der Stahltraversen 3, 4 in die Ausnehmungen 23 die angedeuteten Haltebügel 26 (Fig. 5) von unten gegen den Polsterträger 22 schraubt, so daß die Stahltraversen 4, 5 zwischen Polsterträger 22 und Haltebügel 26 festliegen. Das linke Ende der Stahltraverse 5 ist als Lager für die Peitsche eines Schlosses eines Sicherheitsgurtes ausgebildet (nicht sichtbar). Das rechte Ende dient als Lager 27 für ein Ende des nicht dargestellten Sicherheitsgurtes.

## Patentansprüche

1. Sitzunterteil für Fahrzeugsitze bestehend aus einem Sitzrahmen (1) und einem Polsterträger (22), wobei der Sitzrahmen (1) aus über mindestens zwei Stahltraversen (4, 5) miteinander verbundenen Längsträgern (2, 3) besteht, wobei die hintere Stahltraverse (5) in Lagerböcken (11, 12) gehalten ist, wobei der Polsterträger (22) auf den Stahltraversen (4, 5) gelagert ist, wobei an den Längsträgern (2, 3) Beschläge (15, 16) für die Rückenlehne angeordnet sind und wobei Lager für Schnapphaken (21) der Beschläge (15, 16) vorgesehen sind, dadurch gekennzeichnet, daß der Sitzrahmen (1) aus thermoplastischem hochfestem Kunststoff besteht, daß die hintere Stahltraverse (5) in auf verstell- und arretierbaren Längsschienen (13, 14) angeordneten Lagerböcken (11, 12) gehalten ist, daß sich die Längsträger (2, 3) auf diesen Längsschienen (13, 14) abstützen, daß der Polsterträger (22) aus zähem Kunststoff besteht, und daß die hintere Stahltraverse (5) das Lager für die Schnapphaken (21) der Beschläge (15, 16) bildet.

2. Sitzunterteil nach Anspruch 1, dadurch gekennzeichnet, daß die Längsträger (2, 3) schalenartig gestaltet sind und ihr Innenraum (6) Verstärkungsrippen (7) aufweist.

3. Sitzunterteil nach einem der Ansprüche 1 oder 2, dadurch gekennzeichnet, daß der Polsterträger (22) aus einem Acrylnitril-Butadien-Styrol-Copolymer besteht.

4. Sitzunterteil nach einem der Ansprüche 1 oder 2, dadurch gekennzeichnet, daß der Polsterträger (22) aus einem Blend aus Polycarbonat/Acrylnitril-Butadien-Styrol-Copolymer besteht.

5. Sitzunterteil nach einem der Ansprüche 1 bis 4, dadurch gekennzeichnet, daß die Längsträger (2, 3) aus Polyamid-6 mit einem Glasfasergehalt von 20 bis 40 Gew.-% bestehen.

6. Sitzunterteil nach einem der Ansprüche 1 bis 4, dadurch gekennzeichnet, daß die Längsträger (2, 3) aus Polyamid-6.6 mit einem Glasfasergehalt von 20 bis 40 Gew.-% bestehen.

7. Sitzunterteil nach einem der Ansprüche 1 bis 6, dadurch gekennzeichnet, daß die hintere Stahltraverse (5) als Lager (27) für einen Sicherheitsgurt dient.

## Claims

1. Seat underpart for vehicle seats, comprising a seat frame (1) and an upholstery carrier (22), the seat frame (1) comprising longitudinal members (2, 3) which are connected to one another via at least two steel cross members (4, 5), the rear steel cross member (5) being held in bearing brackets (11, 12), the upholstery carrier (22) being supported on the steel cross members (4, 5), metal fittings (15, 16) for the back of the seat being disposed on the longitudinal members (2, 3) and bearings being provided for snap-on hooks (21) of the metal fittings (15, 16), characterized in that the seat frame (1) is made of high-strength thermoplastic material, that the rear steel cross member (5) is held in bearing brackets (11, 12) disposed on adjustable and lockable longitudinal rails (13, 14), that the longitudinal members (2, 3) are supported on said longitudinal rails (13, 14), that the upholstery carrier (22) is made of tough plastic material, and that the rear steel cross member (5) forms the bearing for the snap-on hooks (21) of the metal fittings (15, 16).

2. Seat underpart according to claim 1, characterized in that the longitudinal members (2, 3) are shaped in a dish-like manner and their interior space (6) has reinforcing ribs (7).

3. Seat underpart according to one of claims 1 or 2, characterized in that the upholstery carrier (22) is made of an acrylonitrile-butadiene-styrene copolymer.

4. Seat underpart according to one of claims 1 or 2, characterized in that the upholstery carrier (22) is made from a blend of polycarbonate / acrylonitrile-butadiene-styrene copolymer.

5. Seat underpart according to one of claims 1 to 4, characterized in that the longitudinal members (2, 3) are made of polyamide 6 having a glass fibre content of 20 to 40% by weight.

6. Seat underpart according to one of claims 1 to 4, characterized in that the longitudinal members (2, 3) are made of polyamide 6.6 having a glass fibre content of 20 to 40% by weight.

7. Seat underpart according to one of claims 1 to 6, characterized in that the rear steel cross member (5) serves as a bearing (27) for a seat belt.

## Revendications

1. Socle de fond de siège de véhicule se composant d'un châssis (1) et d'un support (22) de coussin, le châssis (1) du siège se composant de longerons (2, 3) reliés l'un à l'autre par au moins deux traverses d'acier (4, 5), la traverse arrière d'acier (5) étant montée dans des supports (11, 12), le support (22) du coussin étant monté sur les traverses d'acier (4, 5), des ferrures (15, 16) étant disposées sur les longerons (2, 3) pour le dossier et des supports étant prévus pour des crochets d'encliquetage (21) des ferrures (15, 16), caractérisé en ce que le châssis (1) du siège est en matière thermoplastique à grande résistance, en ce que la traverse arrière d'acier (5) est montée dans des supports (11, 12) disposés sur des profilés longitudinaux (13, 14) déplaçables et blocables, en ce que les longerons (2, 3) prennent appui sur ces profilés longitudinaux (13, 14), en ce que le support (22) du coussin est en matière plastique tenace et en ce que la traverse arrière d'acier (5) forme le support du crochet (21) d'encliquetage des ferrures (15, 16).

2. Socle de fond de siège selon la revendication 1, caractérisé en ce que les longerons (2, 3) sont en forme de coques et leur volume interne (6) comporte des nervures de renfort (7).

3. Socle de fond de siège selon l'une des revendications 1 ou 2, caractérisé en ce que le support (22) du coussin est en un copolymère d'acrylonitrile-butadiènestyrène.

4. Socle de fond de siège selon l'une des revendications 1 ou 2, caractérisé en ce que le support (22) du coussin est en un mélange de polycarbonate et de copolymère d'acrylonitrile-butadiène-styrène.

5. Socle de fond de siège selon l'une des revendications 1 à 4, caractérisé en ce que les longerons (2, 3) sont en Polyamide-6 ayant une teneur en fibres de verre de 20 à 40% en poids.

6. Socle de fond de siège selon l'une des revendications 1 à 4, caractérisé en ce que les longerons (2, 3) sont en Polyamide-6.6 ayant une teneur en fibres de verre de 20 à 40% en poids.

7. Socle de fond de siège selon l'une des revendications 1 à 6, caractérisé en ce que la traverse arrière d'acier (5) sert de support (27) pour une ceinture de sécurité.
